# EUROPEAN PATENT APPLICATION

(11) **EP 4 700 624 A1**
(43) Date of publication of application: **25.02.2026**
(21) Application number: 24195705.9
(22) Date of filing: 21.08.2024
(51) Int. Cl.: G06F 21/60, H04L 9/08, H04L 9/32, H04L 9/40, H04L 67/12, H04W 4/40, H04W 12/033

(54) **SAFE DATA TRANSFER OVER AN INTERMITTENTLY LIMITED DATA LINK**

(71) Applicant: Volvo Truck Corporation, 405 08 Göteborg (SE)
(72) Inventor: PRZYBYLAK, David, 411 25 Göteborg (SE)
(74) Representative: Kransell & Wennborg KB

(57) **Abstract**

A computer-implemented method for safe transfer of a large data set from a sender system (110) to a recipient system (120), which are connected by a data link (130) to which a volume limit applies intermittently. The method is performed by processing circuitry (111) in the sender system and comprises: obtaining a data set (D); generating an asymmetric key pair comprising a private key (Kpr) and a public key (Kpu); sharing the private key of the asymmetric key pair with the recipient system; encrypting the data set using the public key of the asymmetric key pair, for thereby obtaining an encrypted data set (E) which is decryptable only by means of the private key; awaiting a time period in which the volume limit does not apply to the data link; and, in that time period, transferring the encrypted data set to the recipient system over the data link.

## Description

### TECHNICAL FIELD

The present disclosure relates generally to safe digital communication. In particular aspects, the disclosure relates to safe data transfer over an intermittently limited data link. The disclosure can be applied to heavy-duty vehicles, such as trucks, buses, and construction equipment, among other vehicle types. Although the disclosure may include examples described with respect to a particular vehicle, the disclosure is not restricted to any particular vehicle.

### BACKGROUND

A heavy-duty vehicle according to the state of the art collects very large data sets at runtime, such as high-resolution video recordings of the vehicle's environment, which may support the operation of safety systems or driver-assistance systems that use machine learning (ML) models (or artificial intelligence models, AI models). Depending on the use case at hand, it is not always permissible to purge the collected data from the vehicle's memory in a short time perspective, but the data may be needed to refine the ML models or evaluate their performance centrally. The need to store the collected data is potentially problematic, not only with respect to storage space usage but also with respect to data protection, notably if the collected data contains faces, number plates and personal data items frequently found in a video recording of an urban driving environment. In many jurisdictions, it is mandatory for commercial actors to implement privacy safeguards of the character laid down in legal instruments such as the Regulation (EU) 2016/679 on the protection of natural persons with regard to the processing of personal data and on the free movement of such data (General Data Protection Regulation, GDPR), the China Cyber Security Law, the California Consumer Privacy Act and other U.S. federal and state law.

Understandably, guaranteeing a high level of data protection in a moving entity like a vehicle is more challenging than in a stationary server, which makes it desirable to move the collected, potentially sensitive data to a safer external storage space. Although the simplicity of this 'evacuation strategy' is appealing at the outset, it may prove difficult to implement in vehicles that regularly operate in areas of poor network coverage. In fact, virtually all wireless links with a moving endpoint will experience fluctuations in quality of service (QoS) and may suffer outages or temporary degradation. This applies to cellular and non-cellular wireless links alike. The option of transmitting very large data sets (e.g., tens or hundreds of megabytes per hour of operating the vehicle, or even more) over satellite connections and other high-reliability alternatives is usually ruled out for cost reasons. In practice, therefore, the overall data transfer capability from the vehicle to the external storage space is subject to a volume limit at least for some periods of time, but the volume limit does not apply always; in other words, the volume limit applies intermittently.

### SUMMARY

According to a first aspect of the disclosure, there is provided a computer system (sender system), which is connected to a recipient system by a data link, to which a volume limit applies intermittently. The computer system comprises processing circuitry configured to: obtain a data set; generate an asymmetric key pair comprising a private key and a public key; share the private key of the asymmetric key pair with the recipient system; encrypt the data set using the public key of the asymmetric key pair, for thereby obtaining an encrypted data set which is decryptable only by means of the private key; await a time period in which the volume limit does not apply to the data link; and, in that time period, transfer the encrypted data set to the recipient system over the data link.

The first aspect of the disclosure may seek to enable safe transfer of data from the computer system (sender system) to the recipient system although the only available data link between these systems is subject to an intermittent volume limit. The first aspect addresses a situation where the data set is so large that it is affected by the volume limit of the data link. For example, if the volume limit specifies a maximum data rate, the data set may be affected by the volume limit in the sense that the data rate (data volume transferred per unit time) of the data link implies that the data set cannot be transferred over the data link in acceptably short time; the data would be unacceptably exposed to attacks by unauthorized parties while stored in the computer system. Alternatively, if the volume limit specifies a maximum data volume (volume cap, total data volume limit) which is transferable over the data link in a time period of a predefined duration, the data set may be affected by the volume limit in the sense that a contemplated transfer of the data set is impossible since it would exceed the volume cap.

A technical benefit may include that the encryption operation stops an unauthorized party from accessing any personal data or other sensitive information in the data set. The data set can remain in the computer system - which may be a vehicular computer system - for an extended period of time without jeopardizing data protection requirements. Even if the favorable time period (free period) is far into the future, the unsafe nonencrypted data set is no longer stored in the computer system. A further technical benefit may include that the (unencrypted) data set can be deleted as soon as the encrypted data set has been generated, which ends its exposure to attacks by unauthorized parties and also liberates storage space. A further technical benefit may include that the private key can be deleted from the sender system as soon as the private key has been shared with the recipient system.

According to a second aspect of the disclosure, there is provided computer-implemented method for safe transfer of a large data set from a sender system to a recipient system, which are connected by a data link to which a volume limit applies intermittently. The method comprises the following steps performed by processing circuitry in the sender system: obtaining a data set; generating an asymmetric key pair comprising a private key and a public key; sharing the private key of the asymmetric key pair with the recipient system; encrypting the data set using the public key of the asymmetric key pair, for thereby obtaining an encrypted data set which is decryptable only by means of the private key; awaiting a time period in which the volume limit does not apply to the data link; and, in that time period, transferring the encrypted data set to the recipient system over the data link.

The second aspect pursues similar aims as the first aspect, and it shares at least some of its possible technical benefits.

The first and second aspects of this disclosure can be implemented with a similar degree of technical variation. The following options are examples described primarily from the perspective of the method of the second aspect but are equally applicable to the computer system of the first aspect.

Optionally in some examples, including in at least one preferred example, the data transfer method further comprises deleting the private key from the computer system (sender system) as soon as practicable after sharing the private key with the recipient system. A technical benefit may include that an unauthorized party who gains access to the computer system after the private key has been deleted will lack the necessary means for decrypting the encrypted data set. Preferably, the time period between generating the private key and deleting it is very brief (e.g., less than a second or less than a fraction of a second), which effectively limits the chances of a successful third-party attack.

Optionally in some examples, including in at least one preferred example, the data transfer method further comprises deleting the data set as soon as practicable after encrypting the data set. A technical benefit may include that an unauthorized party who gains access to the computer system after the data set has been deleted will not be able to inspect the data set in unencrypted form. Preferably, the time period between obtaining the data set and encrypting the data set is very brief (e.g., less than a second or less than a fraction of a second), so that the risk of a successful third-party attack is severely limited.

Optionally in some examples, including in at least one preferred example, the sharing of the private key with the recipient system includes further sharing a fingerprint (e.g., a hash, a digitally signed hash). A technical benefit may include that the fingerprint enables the recipient system to verify that the private key and the data set are related. This setup saves processing resources since a fingerprint is generally a very lightweight data structure, which can be verified with a much smaller effort than attempting to decrypt the encrypted data set with a possibly unrelated private key.

Optionally in some examples, including in at least one preferred example, the encrypting of the data set includes storing the encrypted data set in a nonvolatile memory in the computer system (sender system). A technical benefit may include that the encrypted data set is normally not lost in the event of a system reboot or crash, indeed, since the content of a nonvolatile memory survives until the next operating session of a computer system. This provides a valuable safeguard, particularly if a long wait is expected until the time period in which the volume limit does not apply to the data link, which corresponds to a relatively higher likelihood of having to reboot the system. As mentioned above, it is preferable to delete the unencrypted data set from all memories of the computer system (sender system) as soon as practicable after the encryption, which precludes re-generating the encrypted data set by re-encryption of the data set originally obtained.

Some examples, including in at least one preferred example, address setups where the data link is implemented as a data link that includes a high-reliability sub-link and a high-volume sub-link, each extending between the computer system (sender system) and the recipient system. From these, the high-reliability sub-link (e.g., satellite communication channel) has a volume limit, and the high-volume sub-link (e.g., terrestrial cellular or noncellular channel) is available only intermittently. This structure has the effect that the data link as a whole is subject to the volume limit intermittently. In said examples, the private key is shared with the recipient system over the high-reliability sub-link, and the encrypted data set is transferred to the recipient system over the high-volume sub-link. A technical benefit may include that the sharing of the private key has a very high likelihood of completing successfully and/or in short time. A further technical benefit may include that the data link is unobstructed by the transfer of the encrypted data set - or by any unsuccessful attempts to transfer the encrypted data set - so that the private key can be shared without unnecessary waiting time.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 shows an exemplary environment, including a vehicle-mounted computer system (sender system) and a stationary recipient system, where aspects of the present disclosure are put to use.
FIG. 2 is a flowchart of a data transfer method according to aspects of the present disclosure.
FIG. 3 shows a computer system which is connected to a stationary recipient system by a data link comprising a high-reliability sub-link including a satellite communication channel and a high-volume sub-link including a terrestrial cellular channel.
FIG. 4 is a sequence diagram illustrating a unified transfer of a private key and a divided transfer of an encrypted data set (as successive portions) from a computer system (sender system) to a recipient system.
FIG. 5 is another view of the computer system appearing in FIGS. 1 and 3, namely, in the form of a more detailed system diagram showing exemplary inner workings of the computer system.

### DETAILED DESCRIPTION

The detailed description set forth below provides information and examples of the disclosed technology with sufficient detail to enable those skilled in the art to practice the disclosure.

As explained initially, the present disclosure addresses the problem of transferring a data set over an intermittently limited data link that joins two computer systems (sender system, recipient system), especially in situations where the size of the data set exceeds an intermittent volume limit of the data link and/or where it may be undesirable to maintain the data set in the sender system. It is understood that the volume limit may specify a maximum data rate of the data link; in this case, the data set exceeds the volume limit if the data set cannot be transferred over the data link in acceptably short time. Alternatively, the volume limit may specify a maximum data volume (volume cap) which is transferable over the data link in a time period of a predefined duration; in this alternative case, the data set exceeds the volume limit if a contemplated transfer of the data set would exceed the volume cap. Either way, the volume limit is intermittent in the sense that it applies in some time periods (*limitation periods*) and does not apply in other time periods (*free periods*); the timing and sequence of the limitation periods and free periods may or may not be known to the sender system in advance. As will be described in detail below, the present disclosure handles these difficulties by purposefully encrypting the data set, transferring a private key needed to decrypt the encrypted data set ahead of the encrypted data set, and waiting for a time period in which the volume limit does not apply to the data link.

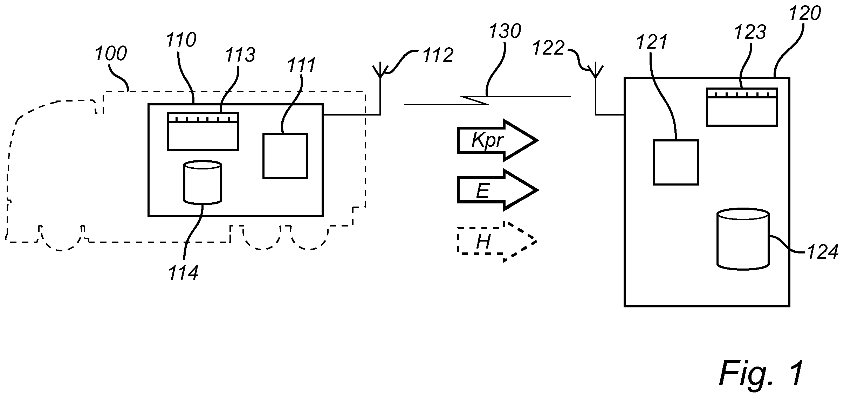

FIG. 1 shows an exemplary environment including a computer system (sender system) 110 which is mounted in a vehicle 100, which may be a heavy-duty vehicle, such as a truck, bus, piece of construction equipment or another heavy commercial vehicle. The sender system 110 comprises processing circuitry 111, a communication interface 112, a runtime memory 113 and a nonvolatile memory 114. The exemplary environment depicted in FIG. 1 further includes a recipient system 120, which is a computer system comprising processing circuitry 121, a communication interface 122, a runtime memory 123 and a nonvolatile memory 124. The sender system 110 is operable to establish a data link 130 (here exemplified as a wireless data link) to the recipient system 120, wherein the respective communication interfaces 112, 122 act as physical endpoints of the data link 130 when it is in existence. The communication interfaces 112, 122 are compliant with at least one common radio access technology (RAT). The RAT may be one or different releases of 3GPP LTE (4G), 3GPP NR (5G) or of a higher generation of (terrestrial) cellular wireless technology, or it may be a IEEE 802.11 (Wi-Fi^{™}) technology or another noncellular short-distance wireless technology, or it may be a satellite communication technology. The communication interfaces 112, 122 may further be configured for optical communication.

The present disclosure is generalizable beyond the example shown in FIG. 1. In particular, is not limited to use cases where the sender system 110 is vehicle-mounted. Nor is the disclosure limited to use cases where the recipient system 120 is stationary. To the contrary, the disclosure is applicable to a use case where both the sender system 110 and the recipient system 120 are mounted in the same vehicle; it may still be desirable to transfer data from the sender system 110 to the recipient system 120 if the recipient system 120 is equipped with (better) technical arrangement for intrusion protection.

A volume limit applies to the data link 130 intermittently, for example, in one of the ways just outlined. The volume limit of the data link 130 may be caused by performance fluctuations over time, including throughput fluctuations, which may be due to one or more of the following:
- interference, reflection or multipath phenomena which change as one or more of the endpoints move;
- naturally varying radio conditions, including atmospheric conditions;
- configuration changes, including different resource allocations or beamforming;
- temporary capacity limitations at the level of a cellular or noncellular access network, including backhaul limitations.

The limited periods, in which the volume limit applies, corresponds to time periods where the performance of the data link 130 is significantly worse than it nominal (or rated, or normal) value. The free periods, in which the volume limit does not apply, correspond to periods where the data link 130 has its nominal performance.

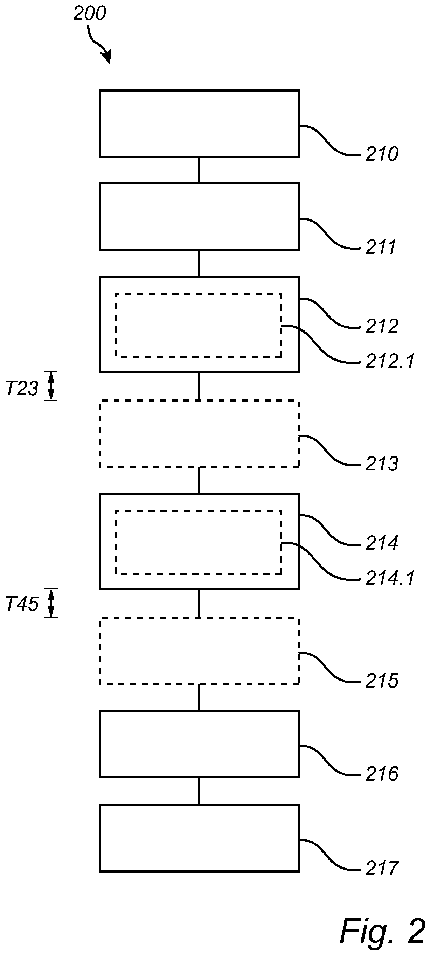

An example behavior of the sender system 110, according to configuration of the sender system 110 or according to software executed the processing circuitry 111 in the sender system 110, will now be illustrated in terms of steps of a method 200, which is depicted in flowchart form in FIG. 2.

In a first step 210 of the method 200, a data set D is obtained. The data set may be obtained by being collected by sensors, and by optionally applying additional processing. The data set may also be generated by the sender system 110 or received from an external communication party. The data set D may be in the form of a file, a collection of files, a file archive, a database, a blockchain data structure, an event stream, an object store, or it may have any other format. It is understood that the size of the data set exceeds the intermittent volume limit of the data link 130.

In a second step 211, an asymmetric key pair comprising a private key Kpr and a public key Kpu is generated. The key pair can be generated by means of a cryptographic key generation algorithm specified for some suitable asymmetric key technique. A considerable number of widely endorsed asymmetric key techniques have been described in the literature, including the Rivest-Shamer-Adleman (RSA) cryptosystem, Diffie-Hellman (DH) key exchange, elliptic curve cryptography, and Digital Signature Standard (DSS). For each of these, at least one constructive algorithm for generating a fresh asymmetric key pair is described in the literature, and software libraries of implementing these algorithms are commercially available. See for example section 5.1 in Digital Signature Standard (DSS), Federal Information Processing Standards Publication (FIPS) 186-5, National Institute of Standards and Technology, Gaithersburg, MD [DOI: 10.6028/NIST.FIPS.186-5] in the case of DSS.

Alternatively, step 211 may be performed by retrieving a pre-generated asymmetric key pair from a safe storage. This is provided sufficient certainty exists that the private keys of the pre-generated key pairs in the safe storage have not been disseminated to unauthorized parties.

In a third step 212, the private key Kpr of the asymmetric key pair is shared with the recipient system 120. The private key Kpr may for example be transferred to the recipient system 120 over the data link 130, or a suitable sub-link thereof. Prior to such transfer, the private key Kpr may optionally be encrypted in a format that the recipient system 120 is capable of decrypting. For example, the private key Kpr can be encrypted using a public key *K'ₚᵤ* in a further asymmetric key pair, from which the recipient system 120 holds the private key *K'ₚᵣ,* wherein the recipient system 120 uses that private key *K'ₚᵣ* to decrypt the encrypted private key. In another example, the private key Kpr can be encrypted using a symmetric key Ks, wherein the sender system 110 and recipient system 120 each hold one copy of the symmetric key Ks.

The third step 212 may alternatively be implemented in that the sender system 110 shares the private key Kpr by depositing it (or an encrypted version thereof) in a shared memory (not shown) to which the recipient system has access. Further alternatively, the private key Kpr may have been pre-deposited in a collection of keys, which is preferably very large, to avoid leakage of the data set D by a brute force decryption effort, and the recipient system 120 has access to this collection. In such circumstances, the sender system 110 may effectuate the sharing of the private key Kpr in step 212 by sending the recipient system 120 an identifier of the key (e.g., a serial number), based on which the recipient system 120 can retrieve the intended private key Kpr.

Optionally, the third step 212 includes a substep 212.1 of further sharing a fingerprint H with the recipient system 120. The fingerprint H may be a hash, or a digitally signed hash, of a version of the data set D. Advantageously, the fingerprint H is a hash of the encrypted data set E, which is generated in step 214 on the basis of the data set D. This allows the recipient system 120 to verify that the private key and the data set D are related. A possible verification test performed by the recipient system 120 may be to compute a fingerprint H' of the received encrypted data set E, using the same hash function (or one-way function) as the sender system 110 is known to have done, e.g., by prior agreement or by an authoritative specification. If the computed fingerprint H' agrees with the fingerprint H that the recipient system 120 received in substep 212.1, the recipient system 120 has reasonable certainty that the encrypted data set E can be successfully decoded by means of the received private key Kpr.

In an optional fourth step 213 of the method 200, the private key Kpr is deleted from the sender system 110 as soon as practicable after sharing the private key Kpr with the recipient system 120 (step 212). Deleting the private key Kpr as soon as practicable may correspond to minimizing a time T23 elapsing between completion of steps 212 and 213. In particular, the deletion of the private key Kpr may be prioritized over other operations that involve the runtime memory 113 of the sender system 110.

In a fifth step 214, the data set is encrypted using the public key Kpu of the asymmetric key pair, for thereby obtaining an encrypted data set E. By the principles of asymmetric cryptography, the private key Kpr is necessary for decrypting the encrypted data set E. The encrypted data set may optionally be stored (substep 214.1) in the nonvolatile memory 114 of the sender system 110 until it has been transferred to the recipient system 120; the content of a nonvolatile memory may be expected to survive a period of system downtime, a system reboot or a system crash.

After the encrypted data set E has been provided by the encryption in step 214, and after the encrypted data set E has optionally been stored in the nonvolatile memory 114, the data set D can be deleted in an optional sixth step 215. The deletion is preferably performed as soon as practicable after the encryption step 214 has completed, e.g., measures to minimize the time separation T45 are taken in the sender system 110. In some implementations of step 214, a transformative encryption algorithm is used, which modifies the data set D into an encrypted data set E, i.e., the deletion of the data set D is an integral part of the encryption step 214. If instead the encryption algorithm outputs the encrypted data set E while merely reading the data set D, the data set D will remain intact, and a dedicated deletion step 215 may be meaningful.

In a next step 216 of the method 200, a time period in which the volume limit does not apply to the data link 130 is awaited (free period). When this time period occurs, a further step 217 begins in which the encrypted data set E is transferred to the recipient system over the data link 130. The encrypted data set E may then be deleted from the sender system 110. It is understood that if the free period ends before the entirety of the encrypted data set E has been transferred, e.g. because the free period was too brief, the sender system 110 will await a second free period (repetition of step 216) in which the transfer of the encrypted data set E over the data link 130 resumes and may complete.

The method 200 may end here and it may be re-initiated when a second data set D' is obtained (step 210). It is not necessary to generate an asymmetric key pair for the second and further data sets; a system owner may consider it safe to keep using the public key Kpu of the same asymmetric key pair in subsequent encryption operations for a predetermined duration. Hence, between the first execution of the method 200 and up to the expiry of the predetermined duration, steps 211 and 212 (and consequently step 213) may be omitted from method 200; the next execution of the method 200 after the expiry will again include the steps 211 and 212, so that the first asymmetric key pair is succeeded by a new one.

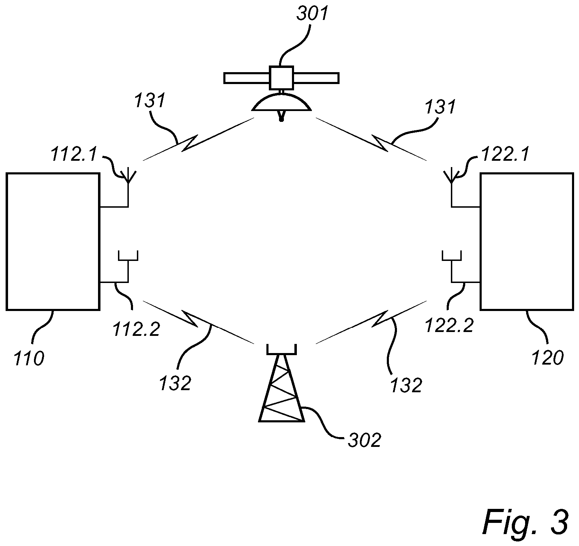

In some use envisioned cases, the intermittent volume limit may be due to the structure of the data link 130. One such structure is illustrated in FIG. 3, where the data link includes a high-reliability sub-link 131, which has a volume limit, and a high-volume sub-link 132, which is available only intermittently. This is to say, the volume limit is not intermittent, but it applies to the high-reliability sub-link 131 at all relevant times. To further clarify, the high-volume sub-link 132 is not operable at all times, and possibly not even in existence at all times. By alternative terminology, the high-reliability sub-link 131 may be described as a high-availability and/or low-bandwidth data link. The high-volume sub-link 132 may be described as a high-bandwidth data link.

For a data link 130 with this structure, the free periods correspond to time periods in which the high-volume sub-link 132 is operable; the limited periods are the complement of the free periods, e.g., time periods in which the high-volume sub-link 132 is operable, broken or altogether absent.

FIG. 3 illustrates an implementation where the high-reliability sub-link 131 uses at least one satellite communication channel supported by satellite-based network infrastructure 301. The high-reliability sub-link 131 is composed of one uplink from a satellite communication interface 112.1 in the sender system 110 to the satellite-based network infrastructure 301 and one downlink from the satellite-based network infrastructure 301 to a satellite communication interface 122.1 in the recipient system 120. In the example of FIG. 3, further, the high-volume sub-link 132 uses at least one cellular communication channel supported by terrestrial cellular network infrastructure 302. The high-volume sub-link 132 is composed of one uplink from a cellular communication interface 112.2 in the sender system 110 to the terrestrial cellular network infrastructure 302, and one downlink from the terrestrial cellular network infrastructure 302 to a cellular communication interface 122.2 in the recipient system 120.

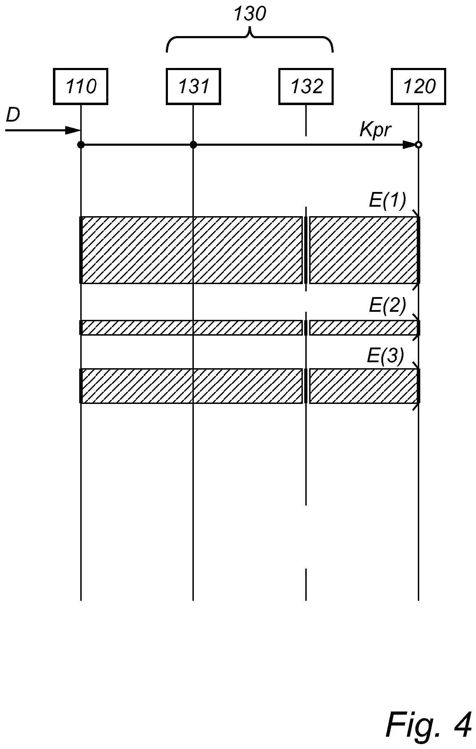

The sequence diagram in FIG. 4 illustrates a possible execution of the above-described data transfer method 200 when implemented in the use case of FIG. 3. As indicated by the horizontal arrow near the top of the diagram, the data set D is obtained (step 210) at the sender system 110. After the private key Kpr has been generated (step 211), it is shared (step 212) with the recipient system 120 over the high-reliability sub-link 131. Further, once the encrypted data set E is available, it is transferred (step 217) over the high-volume sub-link 132 during free periods. As shown in FIG. 4, the encrypted data set E is transferred in three parts E(1), E(2) and E(3). The time between the transfers of E(1) and E(2) and the time between the transfers of E(2) and E(3) represent waiting time (step 216). As long as the encrypted data set E can be restored, or at least successfully decrypted, in the recipient system 120, it is not essential to the present invention how the encrypted data set E is split into the parts E(1), E(2) and E(3).

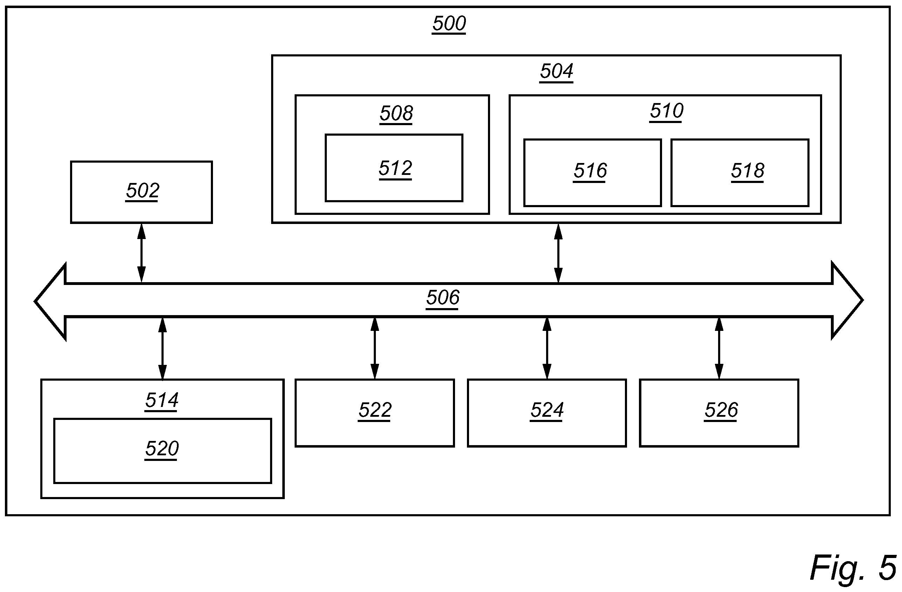

FIG. 5 is a schematic diagram of a computer system 500 for implementing examples disclosed herein. The sender system 110 or the recipient system 120, or both, may be implemented as shown in FIG. 5. The computer system 500 is adapted to execute instructions from a computer-readable medium to perform these and/or any of the functions or processing described herein. The computer system 500 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include nonvolatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500. By alternative terminology, the volatile memory 510 may be referred to as runtime memory.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communication interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (110), which is connected to a recipient system (120) by a data link (130), to which a volume limit applies intermittently, the computer system comprising processing circuitry (111) configured to:
obtain a data set (D);
generate an asymmetric key pair comprising a private key (Kpr) and a public key (Kpu);
share the private key of the asymmetric key pair with the recipient system;
encrypt the data set using the public key of the asymmetric key pair, for thereby obtaining an encrypted data set (E) which is decryptable only by means of the private key;
await a time period in which the volume limit does not apply to the data link; and,
in that time period, transfer the encrypted data set to the recipient system over the data link.

2. A vehicle (100) comprising the computer system (110) of claim 1.

3. A computer-implemented method (200) for safe transfer of a large data set from a sender system (110) to a recipient system (120), which are connected by a data link (130) to which a volume limit applies intermittently,
the method comprising the following steps performed by processing circuitry (111) in the sender system:
obtaining (210) a data set (D);
generating (211) an asymmetric key pair comprising a private key (Kpr) and a public key (Kpu);
sharing (212) the private key of the asymmetric key pair with the recipient system;
encrypting (214) the data set using the public key of the asymmetric key pair, for thereby obtaining an encrypted data set (E) which is decryptable only by means of the private key;
awaiting (216) a time period in which the volume limit does not apply to the data link; and,
in that time period, transferring (217) the encrypted data set to the recipient system over the data link.

4. The method (200) of claim 3, further comprising deleting (213) the private key (Kpr) from the sender system (110) as soon as practicable after sharing (212) the private key with the recipient system (120).

5. The method (200) of claim 1 or 2, further comprising deleting (215) the data set (D) as soon as practicable after encrypting (214) the data set.

6. The method (200) of any of the preceding claims, wherein sharing (212) the private key with the recipient system includes further sharing (212.1) a fingerprint (H) enabling the recipient system to verify that the private key and the data set (D) are related.

7. The method (200) of any of the preceding claims, wherein encrypting (214) the data set (D) includes storing (214.1) the encrypted data set in a nonvolatile memory (114) in the sender system (110).

8. The method (200) of any of the preceding claims, wherein:
the data link (130) includes a high-reliability sub-link (131), which has a volume limit, and a high-volume sub-link (132), which is available only intermittently;
the private key (Kpr) is shared with the recipient system (120) over the high-reliability sub-link; and
the encrypted data set (E) is transferred to the recipient system over the high-volume sub-link.

9. The method (200) of claim 8, wherein the high-reliability sub-link (131) includes a satellite communication channel.

10. The method (200) of claim 8 or 9, wherein the high-volume sub-link (132) includes a cellular communication channel.

11. The method (200) of any of claims 8 to 10, wherein the high-volume sub-link (132) includes a noncellular short-distance communication channel, such as an IEEE 802.11 channel.

12. The method (200) of any of the preceding claims, wherein the volume limit specifies a maximum data rate of the data link.

13. The method (200) of any of the preceding claims, wherein the volume limit specifies a maximum data volume which is transferable over the data link in a time period of a predefined duration.

14. A computer program product comprising program code for performing, when executed by the processing circuitry (111), the method (200) of any of claims 3 to 13.

15. A non-transitory computer-readable storage medium (114) comprising instructions which, when executed by the processing circuitry (111), cause the processing circuitry to perform the method (200) of any of claims 3 to 13.

16. The computer system (110) of claim 1, wherein:
the data link (130) includes a high-reliability sub-link (131), which has a volume limit, and a high-volume sub-link (132), which is available only intermittently; and
the computer system is configured to
- share the private key (Kpr) with the recipient system (120) over the high-reliability sub-link, and
- transfer the encrypted data set (E) to the recipient system over the high-volume sub-link.

17. The computer system (110) of claim 16, wherein the high-reliability sub-link (131) includes a satellite communication channel.

18. The computer system (110) of claim 16 or 17, wherein the high-volume sub-link (132) includes a cellular communication channel.

19. The computer system (110) of any of claims 16 to 18, wherein the high-volume sub-link (132) includes a noncellular short-distance communication channel, such as an IEEE 802.11 channel.

20. The computer system (110) of any of claims 1 and 16 to 19, which is configured to:
delete the private key (Kpr) from the sender system (110) as soon as practicable after sharing the private key with the recipient system (120); and/or
delete the data set (D) as soon as practicable after encrypting (214) the data set.

## Amended claims

### Amended claims in accordance with Rule 137(2) EPC.

1. A computer system (110), which is connected to a recipient system (120) by a data link (130), to which a volume limit applies intermittently, the computer system comprising processing circuitry (111) configured to:
obtain a data set (D);
generate an asymmetric key pair comprising a private key (Kpr) and a public key (Kpu);
share the private key of the asymmetric key pair with the recipient system;
encrypt the data set using the public key of the asymmetric key pair, for thereby obtaining an encrypted data set (E) which is decryptable only by means of the private key;
await a time period in which the volume limit does not apply to the data link; and,
in that time period, transfer the encrypted data set to the recipient system over the data link,
**characterized in that** the private key of the asymmetric key pair is shared with the recipient system prior to said time period in which the volume limit does not apply to the data link.

2. A vehicle (100) comprising the computer system (110) of claim 1.

3. A computer-implemented method (200) for safe transfer of a large data set from a sender system (110) to a recipient system (120), which are connected by a data link (130) to which a volume limit applies intermittently,
the method comprising the following steps performed by processing circuitry (111) in the sender system:
obtaining (210) a data set (D);
generating (211) an asymmetric key pair comprising a private key (Kpr) and a public key (Kpu);
sharing (212) the private key of the asymmetric key pair with the recipient system;
encrypting (214) the data set using the public key of the asymmetric key pair, for thereby obtaining an encrypted data set (E) which is decryptable only by means of the private key;
awaiting (216) a time period in which the volume limit does not apply to the data link; and,
in that time period, transferring (217) the encrypted data set to the recipient system over the data link,
**characterized in that** the private key of the asymmetric key pair is shared with the recipient system prior to said time period in which the volume limit does not apply to the data link.

4. The method (200) of claim 3, further comprising deleting (213) the private key (Kpr) from the sender system (110) as soon as practicable after sharing (212) the private key with the recipient system (120).

5. The method (200) of claim 3 or 4, further comprising deleting (215) the data set (D) as soon as practicable after encrypting (214) the data set.

6. The method (200) of any of the preceding claims, wherein sharing (212) the private key with the recipient system includes further sharing (212.1) a fingerprint (H) enabling the recipient system to verify that the private key and the data set (D) are related.

7. The method (200) of any of the preceding claims, wherein encrypting (214) the data set (D) includes storing (214.1) the encrypted data set in a nonvolatile memory (114) in the sender system (110).

8. The method (200) of any of the preceding claims, wherein:
the data link (130) includes a high-reliability sub-link (131), which has a volume limit, and a high-volume sub-link (132), which is available only intermittently;
the private key (Kpr) is shared with the recipient system (120) over the high-reliability sub-link; and
the encrypted data set (E) is transferred to the recipient system over the high-volume sub-link.

9. The method (200) of claim 8, wherein the high-reliability sub-link (131) includes a satellite communication channel.

10. The method (200) of claim 8 or 9, wherein the high-volume sub-link (132) includes a cellular communication channel.

11. The method (200) of any of claims 8 to 10, wherein the high-volume sub-link (132) includes a noncellular short-distance communication channel, such as an IEEE 802.11 channel.

12. The method (200) of any of the preceding claims, wherein the volume limit specifies a maximum data rate of the data link.

13. The method (200) of any of the preceding claims, wherein the volume limit specifies a maximum data volume which is transferable over the data link in a time period of a predefined duration.

14. A computer program product comprising program code for performing, when executed by the processing circuitry (111), the method (200) of any of claims 3 to 13.

15. A non-transitory computer-readable storage medium (114) comprising instructions which, when executed by the processing circuitry (111), cause the processing circuitry to perform the method (200) of any of claims 3 to 13.
